# EUROPÄISCHE PATENTSCHRIFT

(11) **EP 1 526 049 B1**
(45) Veröffentlichungstag und Bekanntmachung des Hinweises auf die Patenterteilung: **15.11.2006**
(21) Anmeldenummer: 04405629.9
(22) Anmeldetag: 07.10.2004
(51) Int. Cl.: B60S 3/04, B05B 12/00

(54) **Sicherheits-Waschlanze**
Safe washing spraygun
Pistolet de lavage de sécurité

(30) Priorität: 23.10.2003 CH 18202003
(43) Veröffentlichungstag der Anmeldung: 27.04.2005
(73) Patentinhaber: Eta Technik AG, 9496 Balzers (LI)
(72) Erfinder: Vogt, WIlfried O., 9496 Balzers (LI)
(74) Vertreter: Schreiber, Wolfgang

(56) Entgegenhaltungen:
- EP-A- 1 060 800
- US-A- 3 265 087
- US-A- 5 381 962

## Beschreibung

Die Erfindung betrifft eine Sicherheits-Waschlanze, beispielsweise zum Einsatz in Waschanlagen für Kraftfahrzeuge und dergleichen Anwendungen, gemäss dem Oberbegriff des Patentanspruchs 1.

Die Aussenreinigung von Kraftfahrzeugen und dergleichen erfolgt in zunehmendem Masse in eigens dafür erstellten Waschanlagen. Einerseits existieren automatische Waschstrassen mit rotierenden Bürsten- oder Lamellen. Andererseits erfreuen sich in zunehmendem Masse sogenannte Selbstbedienungs-Lanzenwaschanlagen bzw. SB-Lanzenwaschanlagen, in denen der Automobilist sein Kraftfahrzeug selbst waschen kann, der Beliebtheit der Anwender. In diesen manuellen Waschanlagen wird das Kraftfahrzeug durch mit Hochdruck ausgebrachtes Wasser gereinigt. Dieses Reinigungsverfahren ist für den Lack meist schonender als rotierende Bürsten, welche durch beschädigte Bürstenspitzen oder durch in den Bürsten angesammelte Rückstände die Lackoberfläche zerkratzen können.

Gemäss dem in der manuellen Waschanlage umgesetzten Reinigungsprinzip sind unterschiedliche Waschprogramme anwählbar, in denen das Wasser in warmem oder kaltem Zustand, unter Zusatz von Wasch- und Spülmitteln oder Konservierungsmitteln oder als klares Spülwasser unter Drücken von bis zu 100 bar und mehr ausgebracht wird. Das Ausbringen des unter Hochdruck stehenden Wassers erfolgt über eine Waschlanze, die über eine Schlauchleitung mit einer über eine Steuereinrichtung steuerbare Wasserversorgungseinheit, welche eine Hochdruckpumpe für das Wasser und Aggregate zum Versetzen des Wassers mit den gewünschten Zusätzen umfasst. Die in einer Steuerbox untergebrachte Steuereinheit umfasst in ihrem dem Anwender zugängigen Bereich üblicherweise einen Münzeinwurf und einen Wahlschalter für die Waschprogramme. Ein an der Steuerbox angeordneter Notausschalter soll es dem Anwender in Notsituationen erlauben, die Anlage schnellstmöglich abzuschalten. Zwar sind die bekannten SB-Lanzenwaschanlagen derart ausgelegt, dass Notsituationen infolge von Fehlbedienungen gar nicht erst auftreten können. Dennoch kann es vorkommen, dass dem Anwender die Waschlanze entgleitet und zu Boden fällt. Infolge des unter hohem Druck austretenden Wassers erfährt die Waschlanze einen mehr oder weniger grossen Rückstoss, und sie kann sich innerhalb des durch die Schlauchlänge vorgegebenen Umkreises unkontrolliert über den Boden der Waschanlage bewegen. Dabei könnte das Fahrzeug Kratzer erleiden, oder die anwesenden Personen könnten nass gespritzt werden. In solchen Situationen sollten daher der Anwender oder ein Beistehender möglichst schnell den an der Steuerbox angebrachten Notausschalter betätigen, um die weitere Wasserzufuhr zu der Waschlanze zu unterbrechen. Leider erfolgt die Reaktion der Anwesenden in solchen Situationen oft erst mit einer gewissen Verzögerung oder sie bleibt infolge des Überraschungseffekts ganz aus.

Zur Verhinderung von derartigen unangenehmen Situationen sind aus dem Stand der Technik beispielsweise Waschlanzen als sogenannte Sicherheits-Waschlanzen bekannt, an deren Handgriff ein federbelasteter Betätigungshebel angeordnet ist. Bei Betätigung des Hebels wird ein in der Waschlanze, üblicherweise im Handgriff angeordnetes Sicherheitsventil mechanisch geöffnet. Der Wasseraustritt aus der Waschlanze kann nur bei gezogenem Betätigungshebel erfolgen. Entgleitet die Waschlanze dem Anwender, wird der Betätigungshebel durch die Federkraft in seine Ausgangsstellung zurückbewegt, das Sicherheitsventil wird geschlossen und die Wasserzufuhr unterbrochen.

Während Waschlanzen mit im Handgriff angeordneten mechanischen Abschaltvorrichtungen bereits eine gewisse Verbesserung darstellen, weisen sie doch einige Nachteile auf. Der Betätigungshebel am Handgriff wird durch eine Feder in seine Ausgangsstellung gedrückt, in der das Sicherheitsventil geschlossen ist. Um den Wasseraustritt aus der Waschlanze zu ermöglichen, muss der Anwender den Betätigungshebel ziehen und dabei die Federkraft dieser Rückstellfeder überwinden. Die Federkraft der Rückstellfeder ist jedoch relativ gross, damit das Sicherheitsventil erforderlichenfalls sicher und schnell geschlossen wird. Daher muss der Anwender eine nicht unerhebliche Kraft aufwenden, um den Betätigungshebel gezogen zu halten. Dabei kann die Hand, insbesondere von Personen mit weniger kräftigen Händen, relativ schnell ermüden oder verkrampfen. Der Abstand des Betätigungshebels vom Handgriff ist auf eine durchchnittliche Handgrösse ausgelegt. Personen mit grösseren oder mit kleineren Händen haben daher vielfach Schwierigkeiten beim Ziehen des Betätigungshebels. Die daraus resultierende unnatürliche Handhaltung kann ebenfalls zu einer vorzeitigen Ermüdung der Hand beitragen. Das System Betätigungshebel mit Rückstellfeder und das meist ebenfalls im Handgriff angeordnete Sicherheitsventil erhöhen das Gewicht der Waschlanze nicht unerheblich. Darunter leidet nicht nur für weniger kräftige Personen, insbesondere für Frauen und ältere Personen, der Bedienungskomfort.

Die bekannten Waschlanzen weisen entweder einen linearen Handgriff auf, der sich etwa in axialer Verlängerung des Lanzenrohrs erstreckt, oder sie besitzen einen pistolenartig abgewinkelten Handgriff. Der pistolenartige Handgriff ermöglicht wegen des Abstands der Hand von der Achse der Waschlanze bei der Einhandbedienung relativ wenig Kontrolle über die Position der Lanzenspitze. Dies kann dazu führen, dass die Lanzenspitze in Berühung mit der Lackoberfläche kommt. Wenn die Waschlanze dem Anwender aus der Hand gleitet, fällt sie aus einer relativ grossen Höhe zu Boden. Dabei können der Betätigungshebel oder die Rückstellfeder brechen, oder es kann gar zu Beschädigungen des Sicherheitsventils kommen. Die Anordnung des Sicherheitsventils im Handgriff der Waschlanze führt dazu, dass auch bei nicht gezogenem Betätigungshebel die Schlauchleitung je nach verwendeter Steuerung unter dem erzeugten Hochdruck stehen kann, sobald die Waschanlage in Betrieb gesetzt worden ist. Das bedeutet, dass im Versagensfall der Zufuhrleitung, beispielsweise an der Anschlussstelle der Schlauchleitung an den Handgriff, der Anwender dem unter Hochdruck stehenden Wasser ausgesetzt sein und nass gespritzt werden kann. Die Wahrscheinlichkeit für einen derartigen Versagensfall ist zwar relativ klein; falls er jedoch eintritt, ist dies sehr unangenehm.

Aus der US-A-5,381,962 ist eine Waschlanze bekannt, die ein Lanzenrohr umfasst, an dessen einem Ende eine Spritzdüse angeordnet ist und dessen anderes Ende eine Anschlusskupplung für eine Hochdruckleitung aufweist. In einem mit dem Lanzenrohr verbundenen pistolenartigen Griffteil ist eine Sicherheitseinrichtung angeordnet, die bei Ergreifen des Griffteils die Zufuhr eines Reinigungsmediums, beispielsweise von Wasser, zur Spritzdüse freigibt und diese erforderlichenfalls automatisch unterbindet. In einer Ausführungsvariante umfasst die Sicherheitseinrichtung einen berührungsempfindlichen Membranschalter, der in einem von der Hand eines Anwenders umgreifbaren Abschnitt des Griffteils angeordnet und feuchtigkeitsdicht untergebracht ist. Der Membranschalter steht mit einer automatisch betätigbaren Sicherheitsabschalteinrichtung für die Zufuhr des Reinigungsmediums in Verbindung. Im Gehäuse des pistolenartigen Griffteils sind Batterien bzw. Akkumulatoren als Energieversorgung untergebracht.

Die Sicherheitseinrichtung dieser bekannten Waschlanze bietet bereits eine gewisse Sicherheit bei einem unbeabsichtigten Fallenlassen der Waschlanze. Ein Verzögerungsglied in der Steuerelektronik sorgt dafür, dass die Anlagenpumpe erst nach einer Wartezeit von 1 - 5, vorzugsweise 3 Sekunden abgeschaltet wird. Dies soll es dem Anwender ermöglichen, die Waschlanze aus einer Hand in die andere zu wechseln. Diese Verzögerungszeiten können andererseits zu unangenehmen Beeinträchtigungen und Gefahrensituationen führen, wenn die Waschlanze dem Anwender aus der Hand fällt. Auch ist es bei dieser bekannten Waschlanze für den Betreiber wie für den Anwender nicht ersichtlich, ob eine einwandfreie Funktion gewährleistet ist.

Aufgabe der vorliegenden Erfindung ist es daher, die Waschlanzen des Stands der Technik zu verbessern. Es soll eine Sicherheits-Waschlanze geschaffen werden, welche eine einfache und kontrollierte Handhabung im Betrieb ermöglicht und erforderlichenfalls eine schnelle und zuverlässige Sicherheitsabschaltung der Wasserzufuhr gewährleistet. Es soll sichergestellt sein, dass nur einwandfrei funktionierende Sicherheits-Waschlanzen vom Anwender verwendet werden können. Das Gewicht der Sicherheits-Waschlanze soll möglichst gering gehalten werden können. Beschädigungen des Sicherheitsabschaltmechanismus beim Aufprall einer entglittenen Waschlanze auf den Boden sollen vermieden werden können.

Die Lösung dieser Aufgaben besteht in einer Sicherheits-Waschlanze, welche die im kennzeichnenden Abschnitt des Patentanspruchs 1 angeführten Merkmale aufweist. Weiterbildungen und/ oder vorteilhafte Ausführungsvarianten der Erfindung sind Gegenstand der abhängigen Patentansprüche.

Die Erfindung schlägt eine Sicherheits-Waschlanze vor, welche beispielsweise zum Einsatz in Waschanlagen auf Hochdruckbasis für Kraftfahrzeuge und andere ähnliche Anwendungen vorgesehen ist. Die Sicherheits-Waschlanze weist ein Lanzenrohr mit einer Spritzdüse auf, welches über eine Hochdruckleitung mit einer Versorgungseinrichtung für ein Reinigungsmedium, insbesondere Wasser, verbindbar ist. Die Versorgungseinrichtung stellt das Reinigungsmedium, insbesondere Wasser, mit hohen Drücken von beispielsweise bis zu 100 bar und mehr zur Verfügung. An einem mit dem Lanzenrohr verbundenen Griffteil ist eine Sicherheitseinrichtung angeordnet, die bei Ergreifen des Griff teils die Zufuhr des Reinigungsmediums zu der Spritzdüse erlaubt und diese erforderlichenfalls automatisch unterbindet. Die Sicherheitseinrichtung umfasst wenigstens einen berührungsempfindlichen Sensor, der in einem von der Hand eines Anwenders umgreifbaren Abschnitt des Griffteils angeordnet ist und mit einer automatisch betätigbaren Sicherheitsabschalteinrichtung für die Zufuhr des Reinigungsmediums in Verbindung steht. Zur Energieversorgung des Sensors und der am Handgriff angeordneten Elektronik ist eine Energieversorgung bereitgestellt, die beispielsweise in Form von Batterien oder Akkumulatoren im Griffteil angeordnet ist. Damit die einwandfreie Funktion der Sicherheits-Waschlanze gewährleistet ist, wird der Zustand der Energieversorgung, beispielsweise der Ladezustand einer Batterie oder eines Akkumulators, automatisch überwacht. Die Überwachungseinrichtung ist vorzugsweise Bestandteil der am Handgriff untergebrachten Elektronik. Bei einer drohenden Unterbrechung der Energieversorgung, beispielsweise bei Unterschreiten eines vorgebbaren Mindestladezustandes, ist beispielsweise ein Alarmsignal generierbar, welches dem Wartungspersonal anzeigt, dass die Batterie bzw. der Akkumulator ausgetauscht werden muss. Bei Auslösen des Alarmsignals ist gleichzeitig der Betrieb der Sicherheits-Waschlanze unterbunden, um zu verhindern, dass eine Waschlanze ohne Sicherheitsüberwachung und funktionierende Sicherheitsabschaltung benutzt werden kann.

Die Sicherheitseinrichtung der Waschlanze ist im von der Hand umschlossenen Bereich des Handgriffs angeordnet und umfasst wenigstens einen berührungsempfindlichen Sensor. Der Berührungssensor detektiert, ob der Handgriff von der Hand ergriffen ist und steht mit einer automatischen betätigbaren Sicherheitsabschalteinrichtung für die Zufuhr des Reinigungsmediums, das für gewöhnlich unter Hochdruck stehendes Wasser ist, in Verbindung. Solange der Handgriff gehalten ist, ist die Wasserzufuhr freigegeben. Sobald die Hand den Handgriff verlässt, beispielsweise weil die Sicherheits-Waschlanze herunterfällt, wird die Sicherheitsabschalteinrichtung automatisch aktiviert und die weitere Wasserzufuhr sofort unterbunden. Die Bestandteile der im Handgriff angeordneten Sicherheitseinrichtung sind auf das Notwendigste beschränkt und umfassen im wesentlichen nur den Berührungssensor mit der zugehörigen Peripherie, die vorzugsweise integriert ausgebildet ist. Auf mechanische Bestandteile, die beim Aufprall einer fallengelassenen Sicherheits-Waschlanze auf den Boden beschädigt werden könnten, wird weitgehend verzichtet. Daher ist die erfindungsgemässe Sicherheits-Waschlanze gegenüber den aus dem Stand der Technik bekannten Sicherheits-Waschlanzen relativ leicht und handlich.

Prinzipiell können alle bekannten berührungsempfindlichen Sensoren zur Detektion des Erfassens des Handgriffs von der Hand des Anwenders eingesetzt werden. Derartige Sensoren können beispielsweise optisch, kapazitiv oder induktiv funktionieren, auf einer Widerstandsmessung beruhen oder auch mechanisch betätigbare Kontakte, insbesondere Mikroschalter, sein. Mit Hinblick auf das Einsatzgebiet der Sicherheits-Waschlanze in feuchter und schmutziger Umgebung werden Berührungssensoren bevorzugt, die durch den beim Erfassen der Sicherheits-Waschlanze auf das Griffteil einwirkenden Druck aktivierbar sind.

Zur Regulierung der Wasserzufuhr bzw. ganz allgemein der Zufuhr eines Reinigungsmediums wirkt der Sensor mit einem Steuerventil zusammen. Dabei ist das Steuerventil mit Vorteil nicht im Griffteil angeordnet, wo es bei einem Herabfallen der Sicherheits-Waschlanze beschädigt werden könnte. Beispielsweise könnte das Steuerventil im Bereich der Spritzdüse vorgesehen sein. Bereits diese Anordnung verringert das Risiko einer Beschädigung des Steuerventils bei einem Aufschlag auf den Boden, da bei einer zu Boden fallenden Waschlanze das Griffteil wegen seiner grösseren Masse mit grösserer Wucht aufschlägt. Aus Gewichtsgründen und um jeglicher Gefahr von Beschädigungen durch plötzliche mechanische Einwirkungen vorzubeugen, sind das Steuerventil zur Regulierung der Zufuhr des Reinigungsmediums, insbesondere des Wassers, und die zugehörige Steuereinheit ausserhalb des Lanzenrohrs angeordnet. Zweckmässigerweise sind sie in Nachbarschaft zur Versorgungseinrichtung in der Hochdruckleitung angeordnet. Bei SB-Lanzenwaschanlagen ist die Versorgungseinrichtung für eine Waschboxe meist in einem separaten Gehäuse oder in einem eigens dafür vorgesehenen Maschinenraum untergebracht. Durch die Anordnung des Steuerventils zur Regulierung der Zufuhr des Reinigungsmediums, insbesondere des Wassers, bei der Versorgungseinrichtung wird der Bereich, in dem sich der Anwender aufhält, im Gefahrenfall frei von dem unter Hochdruck stehenden Reinigungsmedium gehalten. Verlässt im Betrieb die Hand des Anwenders aus irgendwelchen Gründen den Handgriff der Sicherheits-Waschlanze, erfolgt sofort eine Unterbrechung der Zufuhr des mit Hochdruck bereitgestellten Reinigungsmediums.

Zur Feststellung, ob die Sicherheits-Waschlanze gehalten wird oder gerade die Hand des Anwenders verlässt, muss der Zustand der Sicherheits-Waschlanze, insbesondere des im Handgriff angeordneten Sensors erfasst werden. Dies kann durch die permanente Aussendung eines Signals oder beispielsweise durch eine periodische Abfrage des Sensors erfolgen. In Abhängigkeit von dem ermittelten Zustand des Sensors wird das Steuerventil betätigt. Die Zustandsfeststellung erfolgt dabei öfter als 1 mal pro Sekunde. Vorzugsweise wird der Zustand des Sensors 5 - 15 mal pro Sekunde bestimmt. Dadurch ist sichergestellt, dass im Bedarfsfall die Reinigungsmediumzufuhr möglichst schnell unterbrochen wird.

Die Kommunikation zwischen dem Sensor und der Steuereinheit kann beispielsweise über Verbindungsleitungen erfolgen, die parallel zu der Versorgungsleitung für das Reinigungsmedium verlaufen, beispielsweise in die Hochdruckleitung integriert sind. Vorzugsweise erfolgt die Kommunikation jedoch drahtlos. Eine drahtlose Kommunikation erweist sich in der feuchten Umgebung des Einsatzortes der Sicherheits-Waschlanze als besonders zweckmässig und ist weitgehend unempfindlich gegenüber den herrschenden Verhältnissen und mechanischen Beanspruchungen.

Zur Umsetzung der drahtlosen Kommunikation ist der Sensor mit einer Sende-/Empfangseinheit verbunden, die feuchtigkeitsdicht, vorzugsweise am Griffteil der Sicherheits-Waschlanze untergebracht ist. Die Sende-/ Empfangseinheit ist in einer Elektronik integriert, die beispielsweise am Übergang des Griffteils zum Lanzenrohr untergebracht ist. Die Elektronik am Griffteil steht drahtlos mit einer der Steuereinheit zugehörigen drahtlosen Sende-/ Empfangseinheit in Verbindung.

Die drahtlose Kommunikation zwischen den am Griffteil angeordneten Komponenten und den Komponenten der Steuereinheit erfolgt vorzugsweise über Funk. Die Funkkommunikation ist im Vergleich zu der ebenfalls möglichen Kommunikation über Ultraschall oder Infrarot weniger anfällig gegenüber Störeinflüssen und Abschattungseffekten.

Aus Sicherheitsgründen ist die Sicherheits-Waschlanze derart mit der Versorgungseinrichtung für das unter Hochdruck stehende Reinigungsmedium, insbesondere Wasser, verbunden, dass bei einer Unterbrechung der vom Sensors detektierten und gelieferten Signale bzw. bei einer Unterbrechung der Kommunikation des Sensors mit der Steuereinheit die Zufuhr des Reinigungsmediums zur Sicherheits-Waschlanze sofort unterbrochen wird.

Prinzipiell genügt es, einen Berührungssensor an einer geeigneten Stelle des Handgriffs anzuordnen. Dies setzt jedoch meist auch einen speziell geformten Handgriff voraus, damit das Griffteil immer nur in einer vorgegebenen Position ergriffen werden kann, in welcher der Berührungssensor sicher aktiviert wird. Um die Ausbildung des Griffteils zu vereinfachen und verschiedene Haltungen des Griffteils zu erlauben, weist die Sicherheitseinrichtung im Griffteil zwei oder mehrere Sensoren auf. In einer vorteilhaften Ausführungsvariante der Erfindung sind drei berührungsempfindliche Sensoren im Griffteil angeordnet. Diese sind beispielsweise in gleichen Winkelabständen über den Umfang des Griffteils verteilt.

In einer zweckmässigen Ausführungsform der Erfindung durchsetzt das Lanzenrohr der Sicherheits-Waschlanze das Griffteil axial und mündet in einer Anschlusskupplung für die Hochdruckleitung. Die Sicherheitseinrichtung ist im Griffteil angeordnet. Im Fall von drei druckempfindlichen Sensoren sind diese innerhalb des Griffteils, in Nachbarschaft zum Lanzenrohr angeordnet. Das Griffteil weist beispielsweise Ähnlichkeit mit den Griffen von Motorradlenkern auf. Es umschliesst das Lanzenrohr feuchtigkeitsdicht. Am der Anschlusskupplung für die Hochdruckleitung abgewandten vorderen Ende des Griffteils schliesst eine gekapselte ringförmige Einheit an, innerhalb welcher die Elektronik und die Energieversorgung angeordnet ist.

Die erfindungsgemäss ausgebildete Sicherheits-Waschlanze ist grundsätzlich für alle Arten von Hochdruckanlagen, aber auch für Dampfstrahlgeräte geeignet. Derartige Hochdruckanlagen und Dampfstrahlgeräte kommen beispielsweise im Bauwesen, in der Lebensmittelindustrie, im Haushaltsbereich usw. zum Einsatz. Auch bei automatischen Bürstenwaschanlagen kommen derartige Hochdruckreiniger für die Vorreinigung des Fahrzeugs zur Anwendung. Besonders vorteilhaft ist der Einsatz der erfindungsgemässen Sicherheits-Waschlanze in Selbstbedienungs-Lanzenwaschanlagen für Kraftfahrzeuge oder dergleichen. Bei sogenannten Mehrplatz-Waschanlagen ist jeder Waschboxe eine separate Sicherheits-Waschlanze zuordnenbar.

Während bei der Vorreinigung der Fahrzeuge in automatischen Bürstenwaschanlagen die Hochdruckreiniger von ausgebildetem Personal bedient werden, erfolgt die Bedienung der Waschlanzen in den Waschboxen einer SB-Lanzenwaschanlage durch einen völlig beliebigen Personenkreis. Diese hantieren mehr oder weniger geschickt mit dem Gerät und widmen ihrer Tätigkeit auch nicht immer die gebotene Aufmerksamkeit und Sorgfalt. Die Ausstattung derartiger SB-Lanzenwaschanlagen mit erfindungsgemäss ausgebildeten Sicherheits-Waschlanzen liefert einen Beitrag zur Erhöhung des Anwenderschutzes und erfüllt allfällige Sicherheitsvorschriften.

Mehrplatz-SB-Lanzenwaschanlagen weisen mehreren Waschboxen auf. Mit Vorteil ist jede Waschboxe mit einer erfindungsgemässen Sicherheits-Waschlanze ausgestattet, die in drahtloser Kommunikation, insbesondere in Funkkontakt, mit einer zugehörigen Steuereinheit für ein Steuerventil zur Regulierung der Zufuhr des Reinigungsmediums, insbesondere des Wassers, steht. Dabei ist jeweils eine Sicherheits-Waschlanze einer Waschboxe zugeteilt und nur in dieser Waschboxe funktionsfähig. Die Zuteilung erfolgt durch das Wartungspersonal, welches dem Sender jeder Sicherheits-Waschlanze eine Unikatadresse einer Waschboxe zuteilt. Damit ist die Sicherheits-Waschlanze nur an derjenigen Waschboxe einsetzbar, für welche sie autorisiert wurde. Die Autorisierungsmöglichkeit ist dem normalen Anwender nicht zugängig. Beim Austausch der Sicherheits-Waschlanze einer Waschboxe wird die neue Sicherheits-Waschlanze auf die Waschboxe kodiert und ist damit nur an dieser Waschboxe einsetzbar. Dabei wird die Berechtigung der alten Waschlanze gelöscht. Die Sicherheits-Waschlanzen in den übrigen Waschboxen sind von dieser Neukodierung nicht betroffen.

Weitere Vorteile und Merkmale ergeben sich aus der nachfolgenden Beschreibung einer beispielsweisen Ausführungsvariante der Erfindung unter Bezugnahme auf die schematischen Zeichnungen. Es zeigen:
- Fig. 1: eine erfindungsgemässe Sicherheits-Waschlanze mit einem teilweise geschnittenen Griffteil;
- Fig. 2: einen Querschnitt des Griffteils gemäss Schnittlinie A-A in Fig. 1; und
- Fig. 3: ein Prinzipschema einer mit einer erfindungsgemässen Sicherheits-Waschlanze ausgestatteten Waschanlage.

Die nähere Erläuterung der Erfindung erfolgt am Beispiel einer sogenannten Selbstbedienungs-Lanzenwaschanlage mit einer oder mehreren Waschboxen. Derartige Waschanlagen auf Hochdruckbasis sind dem Fachmann aber auch dem Anwender hinlänglich bekannt und werden beispielsweise von der Anmelderin projektiert, hergestellt, vertrieben und betrieben. Die folgende Beschreibung beschränkt sich daher auf die für das Verständnis unbedingt notwendigen Details.

Eine Selbstbedienungs-Lanzenwaschanlage umfasst eine oder mehrere baulich voneinander getrennte, unter einem gemeinsamen Dach angeordnete Waschboxen, die separat voneinander betreibbar sind. In jeder Waschbox ist ein Schaltkasten angeordnet, der einen Münzeinwurf und einen Wahlschalter für die verschiedenen Waschprogramme aufweist. Üblicherweise ist am Schaltkasten auch noch ein Notausschalter vorgesehen. Jede Waschbox ist mit einer Waschlanze ausgestattet, die über eine Hochdruck-Schlauchleitung mit einer Versorgungseinheit für das Reinigungsmedium, insbesondere Wasser, verbunden ist. Bei den SB-Lanzenwaschanlagen der Anmelderin ist aus Sicherheitsgründen jede Waschbox an eine separate Versorgungseinheit angeschlossen. Die Versorgungseinheiten können in einem separaten Gehäuse oder in einem gemeinsamen Maschinenraum angeordnet sein, der üblicherweise baulich an die Waschboxen anschliesst. Jede Versorgungseinheit umfasst eine Steuereinheit und insbesondere eine Hochdruckpumpe, welche das aus dem Wassernetz bezogene Wasser mit Drücken von bis zu 100 bar und mehr zu der zugeordneten Wasch-lanze fördert. Weiters umfasst die Versorgungseinheit auch noch Anschlüsse für Reinigungsmittel, Spülzusatz, Flüssigwachs usw., welche Zusätze gemäss dem gewählten Waschprogramm dem Wasser beigemischt werden.

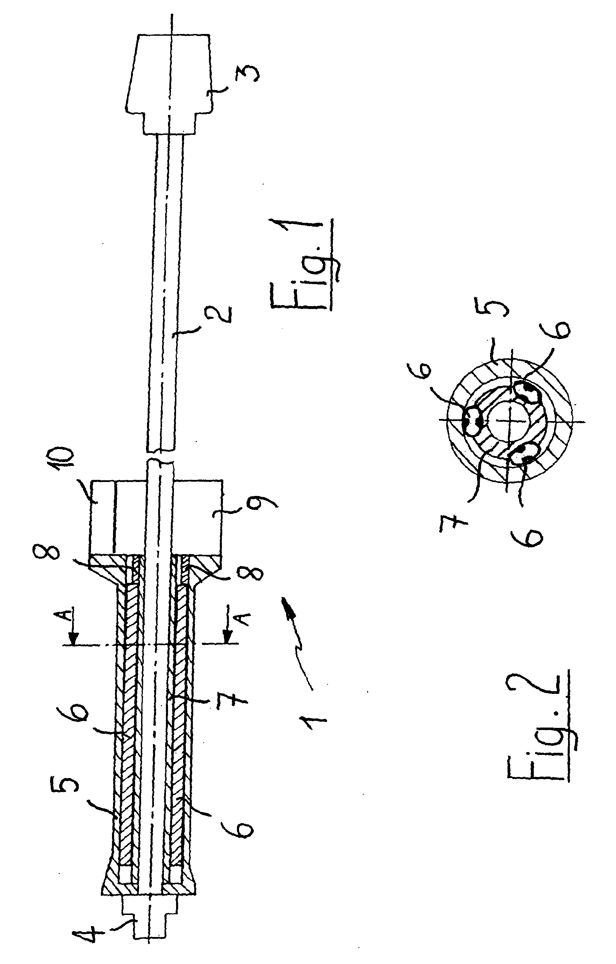

Fig. 1 zeigt eine Sicherheits-Waschlanze, die beispielsweise für den Einsatz in einer o.a. SB-Lanzenwaschanlage ausgebildet ist. Die gesamthaft mit dem Bezugszeichen 1 versehene Sicherheits-Waschlanze weist ein Lanzenrohr 2 auf, an dessen einem, vorderen Ende eine Spritzdüse 3 angeordnet ist. Durch die Spritzdüse 3 tritt das Wasser unter hohem Druck aus. Die Geometrie der Spritzdüse 3 definiert beispielsweise einen spachtelförmigen Austrittsstrahl. Das Lanzenrohr 2 durchsetzt ein Griffteil 5 axial und mündet in einer Anschlusskupplung 4 für die Hochdruck-Schlauchleitung, über welche das Reinigungsmedium zur Sicherheits-Waschlanze 1 gefördert wird. Das Griffteil 5 ist koaxial zum Lanzenrohr 2 angeordnet und weist Ähnlichkeiten beispielsweise zu einem Motorradgriff auf.

Innerhalb des Griffteils 5 sind Sensoren 6 angeordnet, die auf Druck reagieren. Beispielsweise handelt es sich dabei um Kontaktstreifen, die bei Aufbringen eines relativ geringen Druckes einen elektrischen Kontakt schliessen. Das Griffteil ist relativ weich und elastisch, damit der beim Ergreifen des Handgriffs der Sicherheits-Waschlanze 1 von der Hand ausgeübte Druck weitgehend ungehindert auf die Sensoren 6 weitergeleitet wird. Bei dem dargestellten Ausführungsbeispiel liegen die Sensoren 6 nicht direkt an der Aussenwandung des Lanzenrohrs 2 an, sondern sind in eine Zwischenhülse 7 eingelassen, die bei der Montage zusammen mit dem Griffteil 5 auf das Lanzenrohr 2 aufgeschoben wird. Die druckempfindlichen Sensoren 6 sind über Leitungen 8 mit einer Elektronikeinheit 9 verbunden, die an das Griffteil 5 anschliesst. Die Elektronikeinheit 9 umfasst beispielsweise einen ringförmigen Print, auf dem die erforderlichen Komponenten montiert sind. Um Feuchtigkeit abzuwehren sind der Print und die darauf angeordneten Komponenten vergossen. Insbesondere umfasst die Elektronikeinheit eine Sende-/ Empfangseinheit 10 für Funksignale. Eine nicht näher dargestellte Energieversorgung, beispielsweise in Form einer Batterie oder eines Akkumulators ist gleichfalls vorzugsweise in die Elektronikeinheit integriert. Die Energieversorgung weist in der Regel eine Lebensdauer von 5-10 Jahren auf. Sie kann daher mit vergossen sein. Falls die Energieversorgung erschöpft ist, wird die gesamte Elektronikeinheit 9 ausgewechselt.

Die Schnittdarstellung in Fig. 2 zeigt das Griffteil 5 und drei Sensoren 6, die innerhalb des Griffteils 5 angeordnet sind. Die Zwischenhülse, in deren Umfang die Sensoren in gleichmässigen Winkelabständen eingelassen sind, trägt das Bezugszeichen 7.

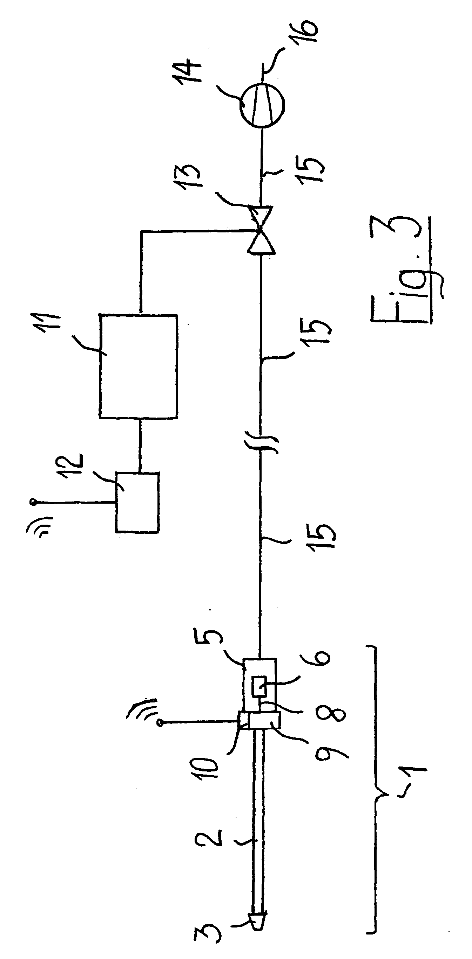

Fig. 3 zeigt in einem Prinzipschema die Wechselwirkung der erfindungsgemässen Sicherheits-Waschlanze mit den Komponenten der SB-Lanzenwaschanlage. Die Sicherheits-Waschlanze ist gesamthaft mit dem Bezugszeichen 1 versehen. Gleiche Bauteile tragen die gleichen Bezugszeichen wie in Fig. 1 und 2. Die an das Griffteil 5 anschliessende Elektronikeinheit 9 umfasst die mit 10 bezeichnete Sende-/Empfangseinheit, die in der Darstellung durch eine symbolische Antenne hervorgehoben ist. Ein Mikroprozessor in der Sende-/ Empfangseinheit 10 überwacht die Sensoren 6, die über die elektrische Verbindungsleitung 8 mit der Elektronikeinheit 9 verbunden sind. Der Mikroprozessor der Sende-/ Empfangseinheit 10 generiert ein Kommunikationssignal und übermittelt dieses per Funk an eine Sende-/Empfangseinheit 12, die mit einer Steuereinheit 11 für ein Steuerventil 13 in der Hochdruckleitung 15 verbunden ist. Die Sende-/Empfangseinheit 12 der Steuereinheit 11 ist beispielsweise im Schaltkasten der Waschbox angeordnet, der auch den Münzeinwurf und den Wahlschalter für die Waschprogramme aufweist.

In Abhängigkeit von den übermittelten Signalen über den Zustand der Sensoren 6 kontrolliert die Steuereinheit 11 über das Steuerventil 13 die Zufuhr des von einer Hochdruckpumpe 14 mit hohem Druck geförderten Reinigungsmediums, insbesondere Wassers. Eine mit dem Bezugszeichen 16 versehene Leitung symbolisiert den Anschluss der Versorgungseinheit mit dem öffentlichen Wassernetz. Es versteht sich, dass die Hochdruckpumpe 14 nicht direkt an das Wassernetz angeschlossen ist. Aus Sicherheitsgrüriden und um den Eintritt der verwendeten Zusätze in das öffentliche Wassernetz völlig auszuschalten, sind weitere Sicherheitseinrichtungen und -kreisläufe zwischen die Hochdruckpumpe 14 und das Wassernetz geschaltet. Das Steuerventil 13 ist in Nachbarschaft zur Hochdruckpumpe 14 innerhalb des Maschinenraums angeordnet. Dadurch ist sichergestellt, dass im abgeschalteten Zustand der Bereich der betreffenden Waschbox frei ist von unter Hochdruck stehendem Reinigungsmedium, insbesondere Wasser.

Zur Inbetriebnahme der SB-Lanzenwaschanlage muss zunächst wenigstens eine Münze eingeworfen und das gewünschte Waschprogramm gewählt werden. Detektieren die Sensoren 6, dass die Sicherheits-Waschlanze von einer Hand erfasst ist, wird ein entsprechendes Signal generiert, welches von der Sende-/Empfangseinheit 10 in der Elektronikeinheit 9 der Sicherheits-Waschlanze 1 an die Sende-/Empfangseinheit 12 der Steuereinheit 11 für das Steuerventil 13 übermittelt wird. Die Hochfrequenzleistung der Sende-/ Empfangseinheit 10 der Sicherheits-Waschlanze beträgt etwa 0,1 mW bis etwa 1 mW. Bei Empfang des Signals gibt die Steuereinheit 11 das Steuerventil 13 frei und das gegebenenfalls mit Zusätzen versehene Wasser wird über die Hochdruckleitung 15 zur Sicherheits-Waschlanze 1 transportiert. Das Wasser fliesst durch das Lanzenrohr 2 und wird unter hohem Druck durch die Spritzdüse 3 ausgespritzt.

Solange die Sicherheits-Waschlanze 1 gehalten ist, gibt das Steuerventil die Wasserversorgung frei. Falls die Sicherheits-Waschlanze 1 dem Anwender aus der Hand entgleitet, wird dies sofort von den Sensoren 6 detektiert. Dazu wird der Zustand der Sensoren 6 öfter als einmal pro Sekunde, vorzugsweise 5 - 15 mal pro Sekunde, abgefragt. Wird eine Veränderung des Zustands der Sensoren 6 festgestellt, wird das Steuerventil 13 sofort geschlossen und dadurch die Zufuhr des Wassers an die Sicheiheits-Waschlanze 1 unterbunden. Die Steuereinheit 11 arbeitet derart mit dem Steuerventil 13 zusammen, dass dieses sofort automatisch geschlossen wird, sobald es zu einer Unterbrechung der Kommunikation zwischen der Steuereinheit 11 und der Elektronikeinheit 9 der Sicherheits-Waschlanze 1 kommt. Dies kann beispielsweise eintreten, falls sich in der Nähe der Waschbox eine Störquelle befindet, die eine Funkkommunikation unterbindet. Die Sicherheits-Waschlanze ist dann nicht mehr betriebsfähig; die Störung wird mit Vorteil am Schaltkasten der Waschbox angezeigt.

Die Sicherheits-Waschlanze nur an derjenigen Waschbox einsetzbar, für welche sie autorisiert worden ist. Die Autorisierung erfolgt durch eine einmalige Kodierung und Anmeldung der Sicherheits-Waschlanze bei der Installation beim für sie vorgesehenen Empfänger. Dieser Vorgang wird durch das Wartungspersonal durchgeführt und kann vom Anwender nicht beeinflusst werden. Der Mikroprozessor in der Sicherheits-Waschlanze wird mit Vorteil in einem möglichst energiesparenden Modus betrieben. Er wird daher nur aktiviert, wenn sich durch das Ergreifen des Handgriffs der Sicherheits-Waschlanze am Zustand der Sensoren etwas ändert. Sonst befindet er sich in einem Energiesparmodus. Der Mikroprozessor überwacht automatisch die Spannung der Energieversorgung und erzeugt und leitet ein Warnsignal weiter, falls eine Mindestspannung unterschritten wird. Dadurch wird erforderlichenfalls eine Unterbrechung der Wasserzufuhr zur Waschlanze ausgelöst und die betreffende Sicherheits-Waschlanze geht in den Störstatus. Am Schaltkasten wird dies vorzugsweise durch eine Störungsmeldung angezeigt.

Die erfindungsgemäss ausgebildete Sicherheits-Waschlanze ist am Beispiel der Anwendung in einer Selbstbedienungs-Lanzenwaschanlage mit wenigstens einer Waschbox erläutert worden. Es versteht sich, dass die Sicherheits-Waschlanze grundsätzlich für alle Arten von Hochdruckanlagen aber auch für Dampfstrahlgeräte geeignet ist. Derartige Hochdruckanlagen und Dampfstrahlgeräte kommen beispielsweise im Bauwesen, in der Lebensmittelindustrie, im Haushaltsbereich usw. zum Einsatz. Auch bei automatischen Bürstenwaschanlagen kommen derartige Hochdruckreiniger für die Vorreinigung des Fahrzeugs zur Anwendung. Besonders vorteilhaft ist der Einsatz der erfindungsgemässen Sicherheits-Waschlanzen in Selbstbedienungs-Lanzenwaschanlagen für Kraftfahrzeuge oder dergleichen mit wenigstens einer Waschboxe, wobei jeder Waschboxe eine Sicherheits-Waschlanze zuordnenbar ist. Während bei der Vorreinigung der Fahrzeuge in automatischen Bürstenwaschanlagen die Hochdruckreiniger von ausgebildetem Personal bedient werden, erfolgt die Bedienung der Waschlanzen in den Waschboxen einer manuellen Waschanlage durch einen völlig beliebigen Personenkreis. Diese hantieren mehr oder weniger geschickt mit dem Gerät und widmen ihrer Tätigkeit auch nicht immer die gebotene Aufmerksamkeit und Sorgfalt. Die Ausstattung derartiger SB-Lanzenwaschanlagen mit erfindungsgemäss ausgebildeten Sicherheits-Waschlanzen liefert daher einen Beitrag zur Erhöhung des Anwenderschutzes und erfüllt allfällige Sicherheitsvorschriften.

## Patentansprüche

1. Sicherheits-Waschlanze, mit einem Lanzenrohr (2), an dessen einem Ende eine Spritzdüse (3) angeordnet ist und dessen anderes Ende eine Anschlusskupplung (4) für eine Hochdruckleitung (15) aufweist, mit einer in einem mit dem Lanzenrohr (2) verbundenen Griffteil (5) angeordneten Sicherheitseinrichtung, die bei Ergreifen des Griffteils (5) die Zufuhr eines Reinigungsmediums, beispielsweise von Wasser, zur Spritzdüse (3) freigibt und diese erforderlichenfalls automatisch unterbindet, wobei die Sicherheitseinrichtung wenigstens einen berührungsempfindlichen Sensor (6) umfasst, der in einem von der Hand eines Anwenders umgreifbaren Abschnitt des Griffteils (5) angeordnet und feuchtigkeitsdicht untergebracht ist und mit einer automatisch betätigbaren Sicherheitsabschalteinrichtung (11, 12, 13) für die Zufuhr des Reinigungsmediums in Verbindung steht, sowie mit einer im Griffteil (5) untergebrachten Energieversorgung, vorzugsweise in Form von Batterien oder Akkumulatoren, **dadurch gekennzeichnet, dass** der Zustand der Energieversorgung, beispielsweise der Ladezustand einer Batterie oder eines Akkumulators, mit einer vorzugsweise im Handgriff untergebrachten Einrichtung (9) überwachbar und bei drohender Unterbrechung der Energieversorgung, beispielsweise bei Unterschreiten eines vorgebbaren Mindestladezustandes, ein Alarmsignal generierbar ist und die Inbetriebnahme der Waschlanze (1) unterbunden oder der Betrieb der Waschlanze abgeschaltet wird.

2. Sicherheits-Waschlanze nach Anspruch 1, **dadurch gekennzeichnet, dass** der Sensor (6) durch einen beim Erfassen auf das Griffteil (5) ausgeübten Druck aktivierbar ist.

3. Sicherheits-Waschlanze nach einem der vorangehenden Ansprüche, **dadurch gekennzeichnet, dass** Sensor (6) mit einem im Abstand vom Handgriff (5) angeordneten Steuerventil (13) zur Regulierung der Zufuhr des Reinigungsmediums zusammenwirkt.

4. Sicherheits-Waschlanze nach Anspruch 3, **dadurch gekennzeichnet, dass** das Steuerventil (13) und eine zugehörige Steuereinheit (11) ausserhalb des Lanzenrohrs (2), vorzugsweise in Nachbarschaft zur Versorgungseinrichtung (14), angeordnet sind.

5. Sicherheits-Waschlanze nach Anspruch 4, **dadurch gekennzeichnet, dass** der Zustand des Sensors (6) öfter als einmal pro Sekunde, vorzugsweise 5-15 mal pro Sekunde, überprüft und an die Steuereinrichtung (11) weitergegeben wird, und dass in Abhängigkeit von dem ermittelten Zustand das Steuerventil (13) betätigbar ist.

6. Sicherheits-Waschlanze nach Anspruch 4 oder 6, **dadurch gekennzeichnet, dass** die Kommunikation zwischen dem Sensor (6) und der Steuereinheit (11) drahtlos erfolgt.

7. Sicherheits-Waschlanze nach Anspruch 6, **dadurch gekennzeichnet, dass** der Sensor (6) mit einer am Handgriff (5) untergebrachten drahtlosen Sende-/Empfangseinheit (10) verbunden ist, die mit einer der Steuereinheit (11) zugehörigen drahtlosen Sende-/Empfangseinheit (12) verbunden ist.

8. Sicherheits-Waschlanze nach Anspruch 6 oder 7, **dadurch gekennzeichnet, dass** die Kommunikation zwischen den im Griffteil (5) angeordneten Komponenten (6, 9,10) und der Steuereinheit (11,12) über Infrarot, Ultraschall oder Funk erfolgt.

9. Sicherheits-Waschlanze nach einem der vorangehenden Ansprüche, **dadurch gekennzeichnet, dass** der Sensor (6) und die Steuereinheit (11) für das Steuerventil (13) derart miteinander zusammenwirken, dass bei einem Ausbleiben der vom Sensor (6) gelieferten Signale bzw. bei einer Unterbrechung der Kommunikation des Sensors (6) bzw. einer mit dem Sensor (6) verbundenen Elektronikeineheit (9) mit der Steuereinheit (11) die Zufuhr des Reinigungsmediums zur Waschlanze automatisch unterbrochen wird.

10. Sicherheits-Waschlanze nach einem der vorangehenden Ansprüche, **dadurch gekennzeichnet, dass** zwei oder mehrere, vorzugsweise drei, Sensoren (3) im Griffteil (5) angeordnet sind.

11. Sicherheits-Waschlanze nach einem der vorangehenden Ansprüche, **dadurch gekennzeichnet, dass** das Griffteil (5) im wesentlichen koaxial zum Lanzenrohr (2) angeordnet ist.

12. Sicherheits-Waschlanze nach einem der vorangehenden Ansprüche, **dadurch gekennzeichnet, dass** das Lanzenrohr (2) das Griffteil (5) durchsetzt.

13. Sicherheits-Waschlanze nach einem der vorangehenden Ansprüche als Bestandteil einer Selbstbedienungs-Lanzenwaschanlage für Kraftfahrzeuge oder dergleichen mit wenigstens einer Waschboxe, wobei jeder Waschboxe eine Sicherheits-Waschlanze (1) zuordnenbar ist.

14. Sicherheits-Waschlanze nach Anspruch 13, insbesondere mit drahtloser Verbindung (10, 12) des Sensors (6) zu einer zugehörigen Steuereinheit (11) für ein Steuerventil (13) zur Regulierung der Zufuhr des Reinigungsmediums, insbesondere des Wassers, **dadurch gekennzeichnet, dass** dem Sender (10) jeder Sicherheits-Waschlanze (1) eine Unikatadresse einer Waschboxe zuteilbar ist und die Sicherheits-Waschlanze nur an derjenigen Waschboxe einsetzbar ist, für welche sie autorisiert wurde.

## Claims

1. Safety washing lance, comprising a lance tube (2) at one end of which is arranged a spray nozzle (3) and the other end of which has a coupling (4) for a high-pressure line (15), and comprising a safety device arranged in a handle part (5) connected to the pipe tube (2), which safety device opens the supply of a cleaning medium, for example, water, to the spray nozzle (3) when the handle part (5) is grasped and automatically cuts off said supply if required, the safety device including at least one touch-sensitive sensor (6) which is arranged in a section of the handle part (5) which can be grasped by the hand of a user, is mounted in a moisture-tight manner and is connected to an automatically actuatable safety switch-off device (11,12,13) for the supply of the cleaning medium, and comprising an energy supply housed in the handle part (5), preferably in the form of storage batteries or accumulators, **characterised in that** the state of the energy supply, for example, the charge state of a storage battery or of an accumulator, can be monitored with a device (9) preferably housed in the handle, and an alarm signal can be generated when interruption of the energy supply is imminent, for example, when the charge falls below a predefinable minimum charge state, and putting into operation of the washing lance (1) is prevented or operation of the washing lance is switched off.

2. Safety washing lance according to claim 1, **characterised in that** the sensor (6) is activatable by a pressure exerted when the handle part (5) is grasped.

3. Safety washing lance according to either of the preceding claims, **characterised in that** the sensor (6) cooperates with a control valve (13) arranged at a distance from the handle (5) for regulating the supply of the cleaning medium.

4. Safety washing lance according to claim 3, **characterised in that** the control valve (13) and an associated control unit (11) are arranged outside the lance tube (2), preferably in the vicinity of the supply device (14).

5. Safety washing lance according to claim 4, **characterised in that** the state of the sensor (6) is monitored more than once per second, preferably 5-15 times per second, and is communicated to the control device, and **in that** the control valve (13) can be actuated in dependence on the state determined.

6. Safety washing lance according to claim 4 or 6, **characterised in that** communication between the sensor (6) and the control unit (11) takes place wirelessly.

7. Safety washing lance according to claim 6, **characterised in that** the sensor (6) is connected to a transceiver unit (10) housed on the handle (5), which transceiver unit (10) is connected to a wireless transceiver unit (12) associated with the control unit (11).

8. Safety washing lance according to claim 6 or 7, **characterised in that** communication between the components (6, 9, 10) arranged in the handle part (5) and the control unit (11, 12) is effected via infrared, ultrasound or radio.

9. Safety washing lance according to any one of the preceding claims, **characterised in that** the sensor (6) and the control unit (11) for the control valve (13) cooperate with one another in such a way that if the signals supplied by the sensor (6) are absent or if communication of the sensor (6) or of an electronic unit (9) connected to the sensor (6) with the control unit (11) is interrupted the supply of cleaning medium to the washing lance is automatically cut off.

10. Safety washing lance according to any one of the preceding claims, **characterised in that** two or more, preferably three, sensors (3) are arranged in the handle part (5).

11. Safety washing lance according to any one of the preceding claims, **characterised in that** the handle part (5) is arranged substantially coaxially with the lance tube (2).

12. Safety washing lance according to any one of the preceding claims, **characterised in that** the lance tube (2) passes through the handle part (5).

13. Safety washing lance according to any one of the preceding claims as a component of a self-service lance washing apparatus for motor vehicles or the like, comprising at least one wash box, a safety washing lance (1) being allocatable to each wash box.

14. Safety washing lance according to claim 13, in particular having a wireless connection (10, 12) of the sensor (6) to an associated control unit (11) for a control valve (13) for regulating the supply of the cleaning medium, in particular water, **characterised in that** a unique address is assignable to the transmitter (10) of each safety washing lance (1) and the safety washing lance can be used only at the wash box for which it has been authorised.

## Revendications

1. Lance de lavage de sécurité, comportant un tube de lance (2) dont une extrémité est dotée d'une buse de pulvérisation (3) et dont l'autre extrémité comporte un coupleur (4) pour le raccordement à un tuyau à haute pression (15), un dispositif de sécurité, placé dans une pièce de préhension (5) reliée au tube de lance (2), qui libère l'amenée d'agent de nettoyage, par exemple d'eau) vers la buse de pulvérisation (3) lorsque l'on saisit la pièce de préhension (5) et qui coupe automatiquement cette amenée en cas de besoin, le dispositif de sécurité comportant au moins un capteur (6) sensible au toucher qui est placé dans une portion de la pièce de préhension (5) pouvant être entourée par la main d'un utilisateur, qui est monté de façon étanche à l'humidité et qui est en liaison avec un dispositif d'arrêt de sécurité (11, 12, 13) à commande automatique permettant d'amener l'agent de nettoyage, ainsi qu'une alimentation électrique montée dans la pièce de préhension (5), se présentant avantageusement sous la forme d'une batterie ou d'un accumulateur, **caractérisée en ce que** l'état de l'alimentation électrique, par exemple l'état de charge d'une batterie ou d'un accumulateur, peut être surveillé par un dispositif (9) monté avantageusement dans la poignée et, en cas de coupure imminente de l'alimentation électrique, par exemple en cas de dépassement par le bas d'un état de charge minimal prescrit, un signal d'alarme peut être généré et la mise en service de la lance de lavage (1) est interrompue ou le fonctionnement de la lance de lavage est arrêté.

2. Lance de lavage de sécurité selon la revendications 1, **caractérisée en ce que** le capteur (6) peut être activé par une pression exercée sur la pièce de préhension (5) lorsque l'on saisit celle-ci.

3. Lance de lavage de sécurité selon l'une des revendications précédentes, **caractérisée en ce que** le capteur (6) coopère avec un clapet de commande (13) placé à distance de la poignée (5) et permettant de réguler l'amenée d'agent de nettoyage.

4. Lance de lavage de sécurité selon la revendication 3, **caractérisée en ce que** le clapet de commande (13) et une unité de commande associée (11) sont placés à l'extérieur du tube de lance (2), avantageusement au voisinage du dispositif d'alimentation (14).

5. Lance de lavage de sécurité selon la revendication 4, **caractérisée en ce que** l'état du capteur (5) est vérifié une fois par seconde, avantageusement 5 à 15 fois par seconde, et est transmis au dispositif de commande (11), et **en ce que** le clapet de commande (13) peut être commandé en fonction de l'état détecté.

6. Lance de lavage de sécurité selon la revendication 4 ou 6, **caractérisée en ce que** la communication entre le capteur (6) et l'unité de commande (11) est effectuée sans fil.

7. Lance de lavage de sécurité selon la revendication 6, **caractérisée en ce que** le capteur (6) est relié à une unité d'émission/réception sans fil (10) qui est logée dans la poignée (5) et qui est reliée à une unité d'émission/réception sans fil (12) associée à l'unité de commande (11).

8. Lance de lavage de sécurité selon la revendication 6 ou 7, **caractérisée en ce que** la communication entre les composants (6, 9, 10), placée dans la pièce de préhension (5), et une unité de commande (11, 12) est effectuée par une liaison infrarouge, une liaison à ultrasons ou une liaison radioélectrique.

9. Lance de lavage de sécurité selon l'une des revendications précédentes, **caractérisée en ce que** le capteur (6) et l'unité de commande (11) destinée au clapet de commande (13) coopèrent entre eux de telle sorte que, l'amenée d'agent de nettoyage à la lance de lavage est automatiquement interrompue en l'absence des signaux délivrés par le capteur (6) respectivement en cas d'interruption de la communication entre le capteur (6) respectivement une unité électronique (9), reliée au capteur (6), et l'unité de commande (11).

10. Lance de lavage de sécurité selon l'une des revendications précédentes, **caractérisée en ce que** deux ou plusieurs, avantageusement trois, capteurs (3) sont placés dans la pièce de préhension (5).

11. Lance de lavage de sécurité selon l'une des revendications précédentes, **caractérisée en ce que** la pièce de préhension (5) est placée sensiblement coaxialement au tube de lancé (2).

12. Lance de lavage de sécurité selon l'une des revendications précédentes, **caractérisée en ce que** le tube de lance (2) traverse la pièce de préhension (5).

13. Lance de lavage de sécurité selon l'une des revendications précédentes faisant partie d'une station de lavage de véhicules automobiles ou analogues avec lance en self-service comportant au moins un box de lavage, une lance de lavage de sécurité (1) pouvant être associée à chaque box de lavage.

14. Lance de lavage de sécurité selon la revendication 13, notamment avec une liaison sans fil (10, 12) entre le capteur (6) et une unité de commande associée (11) destinée à un clapet de commande (13) permettant de réguler l'amenée d'agent de nettoyage, notamment d'eau, **caractérisée en ce qu'**une adresse unique d'un box de lavage peut être attribuée à l'émetteur (10) de chaque lance de lavage de sécurité (1) et la lance de lavage de sécurité ne peut être utilisée que dans le box de lavage auquel elle a été attribuée.
